# EUROPÄISCHE PATENTSCHRIFT

(11) **EP 0 674 960 B1**
(45) Veröffentlichungstag und Bekanntmachung des Hinweises auf die Patenterteilung: **29.04.1998**
(21) Anmeldenummer: 95102246.6
(22) Anmeldetag: 18.02.1995
(51) Int. Cl.: B23B 31/00

(54) **Bohrfutter**
Drilling chuck
Mandrin de perçage

(30) Priorität: 02.04.1994 DE 4411524
(43) Veröffentlichungstag der Anmeldung: 04.10.1995
(73) Patentinhaber: Röhm, Günter Horst, D-89567 Sontheim (DE)
(72) Erfinder: Röhm, Günter Horst, D-89567 Sontheim (DE)
(74) Vertreter: Fay, Hermann, Dipl.-Phys. Dr.

(56) Entgegenhaltungen:
- EP-A- 0 185 162
- EP-A- 0 251 996
- DE-A- 3 406 668
- DE-A- 3 524 036

## Beschreibung

Die Erfindung betrifft ein Bohrfutter für ein drehendes oder drehschlagendes Bohrwerkzeug, mit einem koaxial an eine Bohrspindel anschließbaren Futterkörper, mit im Futterkörper geneigt zur Futterachse verlaufenden Führungsbohrungen und darin verschiebbar geführten Spannbacken, die mit ihrem am Bohrwerkzeug zur Anlage kommenden Backenende in einen im Futterkörper vorgesehenen Aufnahmeraum für das Bohrwerkzeug vorstehen, ferner mit einem mit der Futterachse koaxialen, am Futterkörper gelagerten Stellring, der zum Verschieben der Spannbacken in den Führungsbohrungen ein mit der Futterachse koaxiales Stellgewinde aufweist, das an jeder Spannbacke mit einer daran ausgebildeten Zahnreihe im Eingriff steht, und mit im Futterkörper verlaufenden Reinigungskanälen zur Sauberhaltung des Bohrfutters von beim Bohren entstehendem Bohrschmutz, insbesondere zur Abfuhr von in das Bohrfutter gelangendem Bohrschmutz nach außen.

Derartige Bohrfutter sind aus beispielsweise DE 34 00 149 A1 oder DE 34 06 668 A1 bekannt. Bei ihnen münden die schräg zur Futterachse verlaufenden Reinigungskanäle einerseits im Aufnahmeraum an dessen bohrspindelseitigem Ende und andererseits an der Umfangsfläche des Futterkörpers, so daß beim Bohrvorgang in den Aufnahmeraum fallender Bohrschmutz durch die Reinigungskanäle nach außen aus dem Bohrfutter hinaus gelangen kann. Jedoch kann durch diese Reinigungskanäle nicht verhindert werden, daß Bohrmehl oder -staub in die Führungsbohrungen eindringt und sich zwischen den Spannbacken einerseits und der Wandung der Führungsbohrungen andererseits sowie im Stellgewinde und zwischen diesem und den Zahnreihen festsetzt. Dies kann die Beweglichkeit der Spannbacken in den Führungsbohrungen unzulässig beeinträchtigen, insbes. ihre Drehbeweglichkeit um die Achse der jeweiligen Führungsbohrung, welche die Spannbacken im Rahmen des freien Spiels zwischen dem Stellgewinde und der Zahnreihe an den Spannbacken besitzen. Diese Drehbeweglichkeit kann zu einer Verbesserung der Spannfunktion des Bohrfutters ausgenutzt werden, wie dies im einzelnen etwa in DE 41 29 048 A1 beschrieben ist, worauf hier ausdrücklich Bezug genommen wird. Wird daher die Drehbarkeit der Spannbacken in den Führungsbohrungen erschwert, kann sich die maximal mögliche Spannkraft des Bohrfutters deutlich verringern.

Der Erfindung liegt die Aufgabe zugrunde, ein Bohrfutter der eingangs genannten Art so weiter zu verbessern, daß Bohrschmutz, insbesondere in die Führungsbohrungen eindringender Bohrschmutz, zu keiner Beeinträchtigung der Spannfunktion des Bohrfutters führen kann.

Diese Aufgabe wird nach der Erfindung dadurch gelöst, daß die Reinigungskanäle in der Wandung der Führungsbohrungen für die Spannbacken münden.

Bei dem erfindungsgemäßen Bohrfutter ist jede Führungsbohrung an mindestens einen Reinigungskanal angeschlossen. Dadurch wird zwar nicht unbedingt vermieden, daß Bohrschmutz in die Führungsbohrungen eindringt; durch die Mündungen der Reinigungskanäle in den Führungsbohrungen wird aber überraschenderweise zuverlässig verhindert, daß sich der Bohrschmutz zwischen den Spannbacken einerseits und der Wandung der Führungsbohrungen sowie dem Stellgewinde andererseits festsetzen und die Beweglichkeit der Spannbacken, insbes. ihre Drehbeweglichkeit, störend beeinträchtigen kann.

In diesem Sinn besonders wirksam sind die Reinigungskanäle, wenn ihre Mündungen auf der in Bezug auf die Futterachse innen liegenden Wandungsseite der Führungsbohrungen angeordnet sind, was im allgemeinen bedeutet, daß die Mündung der Reinigungskanäle zweckmäßigerweise der Zahnreihe der Spannbacken in den Führungsbohrungen diametral gegenüber liegt. Vorzugsweise liegen die Mündungen der Reinigungskanäle in Wandungsbereichen der Führungsbohrungen, die sich, gesehen axial vom Aufnahmeraum zur Bohrspindel hin, im oberen Bereich und/oder oberhalb des Stellgewindes befinden.

Eine besonders vorteilhafte Weiterbildung der Erfindung besteht darin, daß die Reinigungskanäle an ihren Mündungen in den Führungsbohrungen mit Reinigungsnuten in Verbindung stehen, die in der Umfangsfläche der Spannbacken und/oder Führungsbohrungen ausgebildet sind, wobei man allerdings aus Fertigungsgründen die Reinigungsnuten in der Regel möglichst nur an den Spannbacken vorsehen wird.

In einer bevorzugten Ausführungsform verlaufen die Reinigungsnuten in Längsrichtung der Spannbacken bzw. Führungsbohrungen. Dabei ist es von Vorteil, wenn sich eine der längs verlaufenden Reinigungsnuten, bezogen auf die Achse der Führungsbohrung, auf der der Zahnreihe diametral gegenüberliegenden Seite der Spannbacke bzw. Führungsbohrung befindet. Die Länge der längsverlaufenden Reinigungsnuten an den Spannbacken sollte zweckmäßigerweise etwa gleich der Länge des maximalen Verschiebungshubs der Spannbacken in den Führungsbohrungen sein, so daß die Reinigungsnut über ihre gesamte Länge an der Mündung oder den Mündungen der Reinigungskanäle entlang läuft, wenn die Spannbacken zwischen dem größt- und dem kleinstmöglichen Spanndurchmesser verstellt werden. Im übrigen kann es von besonderem Vorteil sein, daß je eine der längsverlaufenden Reinigungsnuten an den Spannbacken auf den in Umfangsrichtung des Stellrings beiden Seiten der Zahnreihe ausgebildet ist, und zwar von etwa gleicher Länge wie die der Zahnreihe. Diese beiden längs der Zahnreihe verlaufenden Reinigungskanäle sind besonders geeignet, an der jeweiligen Spannbacke Bohrschmutz aus dem Stellgewinde und der Zahnreihe aufzunehmen und abzuführen.

In einer weiter bevorzugten Ausführungsform verlaufen die Reinigungsnuten quer in Umfangsrichtung der Spannbacken bzw. Führungsbohrungen Bei längs und quer verlaufenden Reinigungsnuten stehen diese zweckmäßigerweise miteinander in Verbindung.

Für den Verlauf der Reinigungskanäle im Futterkörper bestehen im Rahmen der Erfindung verschiedene Möglichkeiten. Eine davon besteht überraschenderweise darin, daß die Reinigungskanäle im wesentlichen in Richtung der Futterachse durch den Futterkörper verlaufen und an der der Bohrspindel zugekehrten Stirnfläche des Futterkörpers nach außen offen enden. Diese Ausführungsform empfiehlt sich besonders dann, wenn die bohrspindelseitige Stirnfläche des Bohrfutters einer stärkeren Luftströmung ausgesetzt ist, die vom Kühlgebläse der Bohrmaschine herrühren kann. Diese Luftströmung kann, je nach Strömungsverhältnissen, eine Saug- oder eine Druckwirkung an den Öffnungen der Reinigungskanäle erzeugen. Im ersten Fall erleichtert dies den Abtransport von Bohrschmutz durch die Reinigungskanäle nach außen, im zweiten Fall kann sich an den Öffnungen ein Staudruck ergeben, der im Futterinneren zu einem Überdruck führen kann, der ebenfalls für den Schmutztransport im Bohrfutter günstig sein und außerdem von vornherein das Eindringen von Bohrmehl und Bohrstaub in das Futterinnere erschweren oder sogar verhindern kann. Insbesondere besteht die Möglichkeit, mit dem an der Bohrmaschine vorhandenen Kühlluftstrom ein Strömungsleitrohr zu speisen und dies gegen die Stirnfläche des Bohrfutters zu richten, so daß sich an der Stirnfläche ein erheblicher Staudruck ergeben kann. Die an einem solchen Strömungsleitrohr austretende Luft kann dann bei geeigneter Anordnung unmittelbar in die Reinigungskanäle eintreten, wozu es sich empfiehlt, die Öffnungen der Reinigungskanäle in der Stirnfläche auf einem mit der Futterachse konzentrischen Kreis anzuordnen, so daß bei der Drehung des Bohrfutters alle Öffnungen nacheinander an der Mündung des Strömungsleitrohres vorbeilaufen.

Eine weitere zweckmäßige Maßnahme zur Erzeugung eines größeren Staudrucks an der Futterstirnseite besteht darin, daß am bohrspindelseitigen Ende des Bohrfutters ein sich zur Bohrmaschine hin erweiternder Luftleitteller vorgesehen ist, der im Boden eine den Druchtritt der Bohrspindel ermöglichende Aussparung aufweist, deren Rand unter Freilassung höchstens eines schmalen Spalts an das Bohrfutter anschließt, und die mit den Öffnungen der Reinigungskanäle an der Stirnseite des Bohrfutters in Strömungsverbindung steht. Für die von der Bohrmaschine nach vorn gegen das Bohrfutter gerichtete, vom Kühlgebläse der Bohrmaschine erzeugte Luftströmung wirkt der Luftleitteller ähnlich wie eine Stauscheibe, welche die Bewegungsenergie der Luftströmung in Staudruck an der Futterstirnseite umsetzt. Der Luftleitteller kann maschinenfest angeordnet oder, besser, am Futterkörper angeschlossen sein. Statt den Kühlluftstrom der Bohrmaschine zu nutzen, besteht im Rahmen der Erfindung auch die Möglichkeit, daß am bohrspindelseitigen Ende des Bohrfutters mit diesem umlaufende Luftleitschaufeln vorgesehen sind, die nach Art eines Gebläserades angeordnet sind und eine Luftströmung erzeugen, die an der Stirnfläche des Futterkörpers zumindest im Bereich der Öffnungen der Reinigungskanäle einen Unterdruck oder einen Überdruck ergibt. Das Gebläserad kann dabei, gegebenenfalls in Verbindung mit weiteren Luftleitelementen, bezüglich der Stirnfläche des Futterkörpers als Saug- oder Druckgebläse arbeiten. In der einfachsten und daher sehr zweckmäßigen Ausführungsform erzeugt das Gebläserad an den Öffnungen der Reinigungskanäle einen Unterdruck. Es genügt dann, daß die Luftleitschaufeln ohne zusätzliche strömungsbeeinflussende Maßnahmen am Futterkörper sitzen, wobei aus Sicherheitsgründen die radial äußeren Schaufelenden von einem Schutzring umgeben sein können.

Eine weitere Möglichkeit, betriebsstörende Verschmutzungen zu verhindern, besteht im Rahmen der Erfindung dann, wenn das Bohrfutter zum Anschluß an eine Bohrspindel bestimmt ist, die einen am Spindelende offenen Luftleitkanal besitzt, der seitens der Bohrmaschine mit Saug- oder Druckluft gespeist wird. Die in diesem Fall bevorzugte Ausführungsform des erfindungsgemäßen Bohrfutters ist dadurch gekennzeichnet, daß der Futterkörper eine Spindelaufnahme für die Bohrspindel besitzt und die Reinigungskanäle in der Spindelaufnahme münden, in der sie mit dem Luftleitkanal in Strömungsverbindung stehen. Wieder kann dabei ein Saug- oder Staudruck den Schmutztransport im Bohrfutter fördern und insbesondere ein Staudruck einen Überdruck im Futterinneren erzeugen, welcher dem tieferen Eindringen des Bohrschmutzes in das Futterinnere entgegen wirkt.

Eine andere sehr vorteilhafte Möglichkeit für den Verlauf der Reinigungskanäle im Bohrfutter besteht darin, daß die Reinigungskanäle im wesentlichen quer zur Futterachse durch den Futterkörper längs Linien, die in zur Futterachse paralleler Projektion Sekanten entsprechen, verlaufen und an der Umfangsfläche des Futterkörpers nach außen offen enden. Dabei müssen die Reinigungskanäle keineswegs geneigt zur Futterachse verlaufen. Sie können auch in einer auf der Futterachse senkrechten Ebene liegen. Auch empfiehlt es sich im Interesse einer möglichst guten Reinigungswirkung, daß die in der Umfangsfläche des Futterkörpers befindlichen Öffnungen der Reinigungskanäle, gesehen in zur Futterachse paralleler Projektion, in der Drehrichtung des Bohrfutters beim Bohren jeweils hinter der mit dem Reinigungskanal verbundenen Führungsbohrung liegen; die Mündungsachsen können mit der jeweiligen Tangente an der Umfangsfläche einen der Drehrichtung des Bohrfutters abgewandten Neigungswinkel bilden, was zu einer Saugwirkung an den Öffnungen der Reinigungskanäle führen kann. In jedem Fall empfiehlt es sich weiter, daß die in der Umfangsfläche des Futterkörpers liegenden Öffnungen der Reinigungkanäle sich axial oberhalb, d. h. auf der vom Aufnahmeraum abgewandten Seite des Stellgewindes befinden und, im Fall ihrer Überdeckung durch den Stellring, durch einen in Umfangsrichtung verlaufenden Ringkanal verbunden sind, der durch Aussparungen im Stellring nach außen geöffnet ist. Der Ringkanal kann durch eine Umfangsnut im Futterkörper und/oder auf der Innenseite des Stellrings gebildet sein. Weiter besteht die besonders vorteilhafte Möglichkeit, den Ringkanal mit den Hohlräumen zu verbinden, die sich im Bohrfutter an der bohrspindelseitigen Mündung jeder Führungsbohrung zwischen dem Futterkörper und dem Stellring befinden. Man erhält dann auch aus diesen Hohlräumen auf sehr einfache Weise eine wirksame Schmutzableitung, die besonders dann sehr vorteilhaft ist, wenn außerdem an der Stirnfläche des Bohrfutters mündende, mit Saug- oder Staudruck beaufschlagte Reinigungskanäle vorhanden sind, was zu einer Durchströmung auch dieser Hohlräume führen kann.

Unabhängig von diesen im einzelnen möglichen Ausgestaltungen empfiehlt es sich natürlich, das Bohrfutter im übrigen so auszubilden, daß der größte Teil des Bohrschmutzes schon möglichst früh beim Eindringen abgefangen und abgeführt werden und daher erst gar nicht tiefer in den Aufnahmeraum gelangen kann. Eine in dieser Hinsicht besonders bevorzugte Ausführungsform ist dadurch gekennzeichnet, daß der Futterkörper einen bohrwerkzeugseitig vor dem Aufnahmeraum angeordneten Kragen aufweist, der im Innendurchmesser etwas großer als der Aufnahmeraum ist und mit einer Innenschulter an den Aufnahmeraum anschließt, und daß in der Kragenwand nach außen führende Öffnungen vorgesehen sind, deren Querschnitt mindestens bis zur Innenschulter reicht. Der in das Bohrfutter fallende Bohrschmutz wird dann schon zu einem großen Teil innerhalb des Kragens an der Innenschulter gefangen und durch die Öffnungen in der Kragenwand nach außen abgeschleudert, was dann besonders wirksam erfolgt, wenn der Öffnungsquerschnitt in der Kragenwand die Innenschulter anschneidet. Außerdem hat es sich als sehr vorteilhaft erwiesen, daß der Kragen außenseitig eine sich zum Stellring hin erweiternde Strömungsleithülse trägt, die mit dem Kragen und dem Futterkörper einen mit den Öffnungen in Verbindung stehenden Ringraum bildet, der durch einen Ringspalt zwischen den Rändern der Strömungsleithülse und des Stellrings nach außen offen ist. In dem Ringraum entsteht bei der Rotation des Bohrfutters eine auswärts durch den Ringspalt gerichtete Luftströmung, die auf die Öffnungen im
Kragen eine Saugwirkung ausübt und aus den Öffnungen abgesaugten Bohrschmutz sehr effektiv durch den Ringraum und den Ringspalt nach außen befördert. Diese Luftströmung kann auf einfache Weise dadurch sehr wirksam verstärkt werden, daß im Ringraum mit dem Bohrfutter rotierende Rippen oder andere Vorsprünge vorgesehen sind, die im Sinne von Gebläseschaufeln arbeiten. Die Rippen oder Vorsprünge können außen am Kragen oder, besser, innen an der Strömungsleithülse sitzen.

Vorzugsweise sind im übrigen zusätzliche Reinigungskanäle vorgesehen, die im oberen, d. h. der Bohrspindel zugewandten Ende des Aufnahmeraums münden und durch den Futterkörper zu seiner Umfangsfläche oder zu seiner bohrspindelseitigen Stirnfläche verlaufen. Durch solche Reinigungskanäle ist die Aufnahmeöffnung direkt der Reinigung zugänglich. Ergänzend oder stattdessen können solche Reinigungskanäle auch zur Spindelaufnahme im Futterkörper verlaufen, wenn das Bohrfutter in der Bohrspindel in schon erwähnter Weise einen am Spindelende offenen Luftleitkanal aufweist. Besitzt im übrigen das Bohrfutter einen offenen Ringraum zwischen dem Stellring und dem Futterkörper auf der axial dem Bohrwerkzeug zugewandten Seite des Stellgewindes, so empfehlen sich weitere Aussparungen im Stellring, die diesen Ringraum nach außen öffnen.

Eine weitere Maßnahme, das Bohrfutter vor funktionsstörenden Verschmutzungen zu sichern, besteht erfindungsgemäß darin, daß die Hohlräume, die sich im Bohrfutter an der bohrspindelseitigen Mündung der Führungsbohrungen zwischen dem Futterkörper und dem Stellring befinden, an weitere Reinigungskanäle angeschlossen sind, die an der bohrspindelseitigen Stirnfläche des Bohrfutters münden. Diese in der Stirnfläche des Bohrfutters liegenden Öffnungen der Reinigungskanäle können sich in der entsprechenden Stirnfläche des Futterkörpers befinden, soweit diese Reinigungskanäle im Futterkörper verlaufen. Es besteht aber natürlich auch die Möglichkeit, daß bei einem Bohrfutter mit zwischen dem Stellring und dem Futterkörper angeordneter, ungewünschte Verdrehungen des Stellrings verhindernder Sperreinrichtung wenigstens einer der weiteren Reinigungskanäle die Bauteile der Sperreinrichtung durchsetzt. Auch bezüglich dieser von den genannten Hohlräumen ausgehenden Reinigungskanäle kann es sich empfehlen, daß die in der Stirnfläche des Bohrfutters liegenden Öffnungen der Reinigungskanäle auf einem mit der Futterachse konzentrischen Kreis angeordnet sind, damit sie gegebenenfalls in einfacher Weise von einem Druckluftstrahl aus einem maschinenfesten Strömungsleitrohr beaufschlagt werden können. Und es können selbstverständlich auch für diese Reinigungskanäle an ihren Öffnungen einen Saug- oder Stauluftdruck erzeugende Maßnahmen zur Wirkung kommen, wie sie im Zusammenhang mit den in den Führungsbohrungen für die Spannbacken mündenden und an der Stirnfläche des Futterkörpres offenen Reinigungskanäle schon ausführlich beschrieben worden sind.

Im folgenden wird die Erfindung an den in der Zeichnung dargestellten Ausführungsbeispielen näher erläutert; es zeigen:
- Fig. 1: ein Bohrfutter nach der Erfindung im Axialschnitt, teils in Seitenansicht,
- Fig. 2: den Querschnitt II - II durch das Bohrfutter nach Fig. 1,
- Fig. 3: den Schnitt III - III in den Fig. 1 und 6,
- Fig. 4: das in Fig. 1 mit IV bezeichnete Detail in vergrößerter Darstellung,
- Fig. 5: den Schnitt V - V durch die Spannbacke des Bohrfutters nach Fig. 1,
- Fig. 6: eine andere Ausführungsform des erfindungsgemäßen Bohrfutters in einer der Fig. 1 entsprechenden Darstellung,
- Fig. 7: eine weitere Ausführungsform des erfindungsgemäßen Bohrfutters in einer den Fig. 1 und 6 entsprechenden Darstellung, jedoch mit strichliniert angedeuteter Bohrmaschine,
- Fig. 8: den Querschnitt VIII - VIII durch das Bohrfutter nach Fig. 7, und
- Fig. 9: ein nochmals anderes Bohrfutter nach der Erfindung, ebenfalls in einer der Fig. 7 entsprechenden Darstellung.

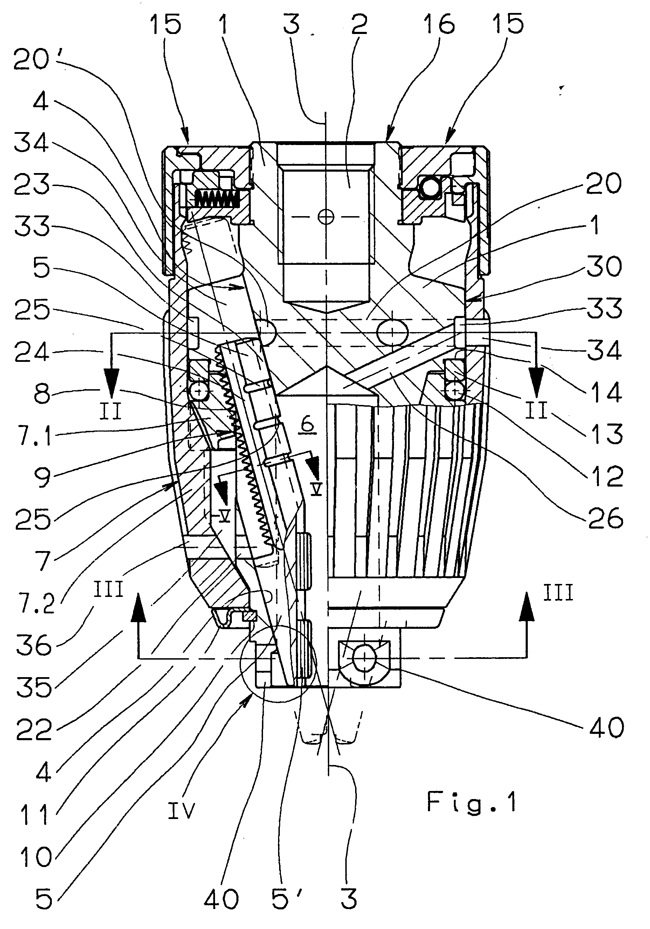

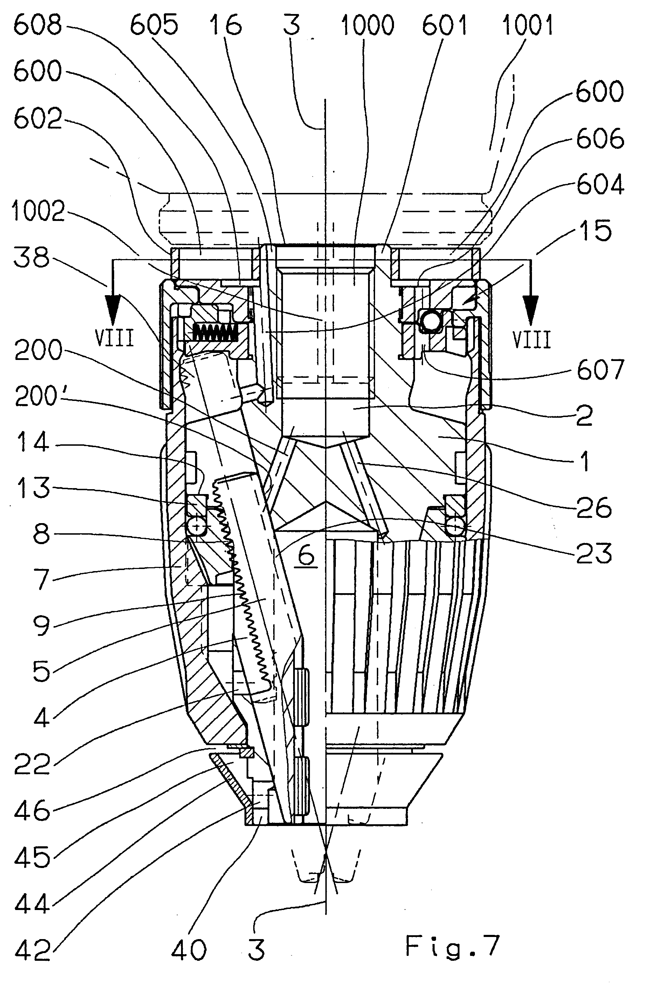

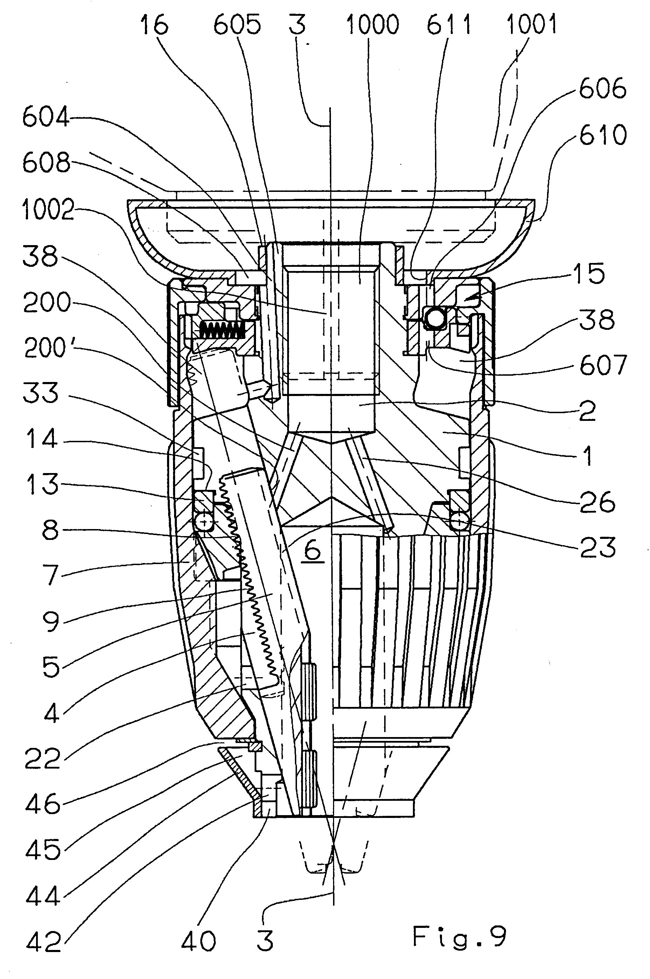

Bei den in der Zeichnung dargestellten Bohrfuttern ist der Futterkörper mit 1 bezeichnet. Der Futterkörper ist mit einer Spindelaufnahme 2 zum koaxialen Anschluß an eine selbst nur in den Fig. 7 und 9 gestrichelt angedeutete Bohrspindel 1000 einer Bohrmaschine 1001 ausgestattet. Im Futterkörper 1 sind drei gleichmäßig über den Umfang verteilte, geneigt zur Futterachse 3 verlaufende Führungsbohrungen 4 vorgesehen, in welchen Spannbacken 5 verschiebbar geführt sind. Die Spannbacken 5 stehen mit ihren am ebenfalls nicht dargestellten Bohrwerkzeug zur Anlage kommenden Backenende in einen im Futterkörper 1 für den Bohrwerkzeugschaft vorgesehenen Aufnahmeraum 6 vor. Dieser Aufnahmeraum 6 kann am bohrspindelseitigen Ende mit einem in die Gewindeaufnahme 2 reichenden Durchbruch versehen sein, durch den hindurch beim schlagenden Bohren die Schlagbeanspruchung von der Bohrspindel unmittelbar auf das Ende des im Aufnahmeraum 6 befindlichen Bohrerschaftes übertragen werden kann. Am Futterkörper 1 ist ein mit der Futterachse 3 koaxialer Stellring 7 gelagert, der zum Verschieben der Spannbacken 5 in den Führungsbohrungen 4 ein mit der Futterachse 3 koaxiales Stellgewinde 8 aufweist, das an jeder Spannbacke 5 mit einer daran ausgebildeten Zahnreihe 9 im Eingriff steht. Der Stellring 7 ist am Futterkörper 1 drehbar, aber im wesentlichen axial unverschiebbar gelagert. Wird der Stellring 7 verdreht, verschieben sich je nach Drehrichtung die Spannbacken 5 in den Führungsbohrungen 4 axial vor oder zurück. Die Spannbacken 5 besitzen einen im wesentlichen kreisförmigen äußeren Umriß, der an der Seite der Zahnreihe 9 abgeflacht ist. Die Spannbacken 5 können sich daher in den Führungsbohrungen 4 um deren Achse begrenzt verdrehen, nämlich im Rahmen des freien Spieles, mit dem der Eingriff der Zahnreihe 9 in das Stellgewinde 8 des Stellringes 7 behaftet ist. Der Stellring 7 ist zweiteilig ausgebildet, nämlich aus einem Gewindering 7.1 und einer Stellhülse 7.2, die gegeneinander unverdrehbar zusammen gesetzt sind. Die Stellhülse 7.2 ist in axialer Richtung nach vorn, d. h. zum Bohrwerkzeug hin, an einem in eine Ringnut des Futterkörpers 1 eingesetzten Anschlagring 10 über eine Stirnscheibe 11 abgestützt. Axial nach hinten, d. h. zur Bohrspindel hin, ist der Gewindering 7.1 über ein Kugellager 12 an einem Lagerring 13 abgestützt, der an einer Ringschulter 14 des Futterkörpers 1 gehalten ist. Um das Bohrfutter gegen unbeabsichtigtes Öffnen während des Bohrbetriebs zu schützen und im übrigen die Möglichkeit zu schaffen, daß sich das Bohrfutter während des Bohrens begrenzt selbsttätig nachstellen kann, wenn sich die an den Spannbacken 5 vorgesehenen, aus Hartmetall bestehenden Spannschneiden 5' in den Bohrerschaft eingraben sollten, sind die unerwünschte Verdrehung des Stellrings 7 ver- oder begrenzt behindernde Sperreinrichtungen vorgesehen, die in den Fig. 1, 6, 7 und 9 allgemein mit 15 bezeichnet und z. B. in der DE 43 13 742.3 näher beschrieben sind, so daß sie hier keiner weiteren Erörterung bedürfen, da ihr Aufbau im einzelnen für die Erfindung ohne Bedeutung ist.

Im Futterkörper 1 verlaufen Reinigungskanäle, die es ermöglichen, beim Bohren in das Bohrfutter gelangenden Bohrschmutz nach außen abzuführen und seine Festsetzung im Bohrfutter zu verhindern, so daß die Arbeitsweise des Bohrfutters durch solchen Bohrschmutz nicht beeinträchtigt werden kann. Wesentlich für die Erfindung ist, daß Reinigungkanäle 20, 200, 21, 22 vorgesehen sind, die in der Wandung der Führungsbohrungen 4 für die Spannbacken 5 münden, wobei für jede Führungsbohrung 4 mindestens einer, in den Ausführungsbeispielen allerdings zwei dieser Reinigungskanäle, nämlich 20, 22 bzw. 21, 22 und 200, 22 vorgesehen sind. Die Mündungen 20', 200', 21' der Reinigungskanäle 20, 200, 21 sind auf der in Bezug auf die Futterachse 3 innen liegenden Wandungsseite der Führungsbohrungen 4 angeordnet; sie liegen also der Zahnreihe 9 der Spannbacken 5 in den Führungsbohrungen 7 jeweils diametral gegenüber. Im übrigen liegen die Mündungen 20', 200', 21' dieser Reinigungskanäle 20, 200, 21 in Wandungsbereichen der Führungsbohrung 4, die sich axial im oberen Bereich des Stellgewindes 8 befinden. Weiter stehen diese Reinigungskanäle 20, 200, 21 an ihren Mündungen 20', 200', 21' in den Führungsbohrungen 4 mit Reinigungsnuten 23, 24, 25 in Verbindung, die in der Umfangsfläche der Spannbacken 5 ausgebildet sind. Stattdessen oder ergänzend können solche Reinigungsnuten selbstverständlich auch in der Wandung der Führungsbohrungen 4 selbst ausgebildet sein, was aber fertigungsmäßig umständlich und aufwendiger und daher in der Zeichnung nicht dargestellt ist. Diese Reinigungsnuten 23, 24, 25 verlaufen in Längsrichtung der Spannbacken 5 bzw. Führungsbohrungen. Insbes. befindet sich eine der längsverlaufenden Reinigungsnuten, nämlich 23, bezogen auf die Achse der Führungsbohrung 4, auf der der Zahnreihe 9 diametral gegenüber liegenden Seite der Spannbacke 5 bzw. Führungsbohrung, ist also unmittelbar mit der Mündung 20', 200', 21' des jeweiligen Reinigungskanals 20, 200, 21 verbunden. Die Länge dieser längsverlaufenden Reinigungsnuten 23 an den Spannbacken 5 ist etwa gleich der Länge des maximalen Verschiebungshubs der Spannbacken 5 in den Führungsbohrungen 4, so daß beim vollständigen Verschieben der Spannbacken 5 zwischen ihren dem größtmöglichen und dem kleinstmöglichen Spanndurchmesser entsprechenden Stellungen die Reinigungsnut 23 über ihre gesamte Länge an der Mündung 20', 200', 21' des Reinigungskanals 20, 200, 21 entlangläuft. Je eine weitere der längsverlaufenden Reinigungsnuten, nämlich 24, an den Spannbacken 5 ist auf den in Umfangsrichtung des Stellrings 7 beiden Seiten der Zahnreihe 9 ausgebildet, und zwar in gleicher Länge wie die Zahnreihe 9 selbst. Diese Reinigungsnuten 24 sind insbes. dazu bestimmt, Bohrschmutz aufzunehmen und abzuführen, der sich im Stellgewinde 8 bzw. in den Zahnlücken der Zahnreihe 9 sammeln sollte. Im übrigen können weitere Reinigungsnuten 25 quer in Umfangsrichtung der Spannbacken 5 bzw. Führungsbohrungen verlaufen, wobei in den in der Zeichnung dargestellten Fällen mit längs- und querverlaufenden Reinigungsnuten 23, 24, 25 diese miteinander in Verbindung stehen.

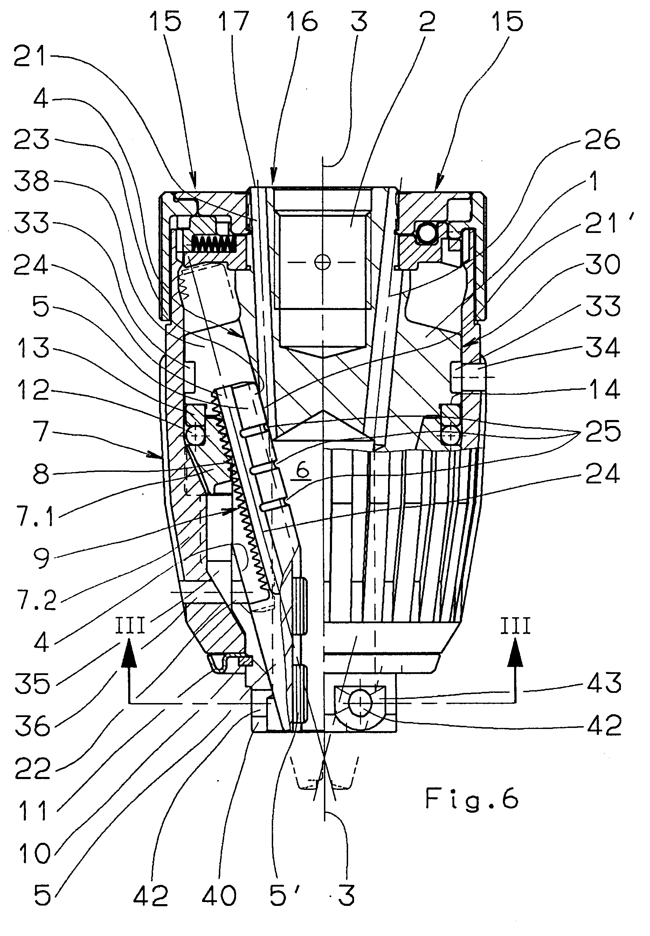

Die Reinigungskanäle 21 können, wie im Fall der Fig. 6, im wesentlichen in Richtung der Futterachse 3 durch den Futterkörper 1 verlaufen und an der der Bohrspindel zugekehrten Stirnfläche 16 des Futterkörpers 1 nach außen offen enden. Dabei können diese Reinigungskanäle 21, was aber aus der Fig. 6 im einzelnen nicht ersichtlich ist und nur anhand der Fig. 7 bis 9 später noch beschrieben wird, an ihren in der Stirnfläche 16 des Futterkörpers 1 liegenden Öffnungen 17 beim Bohren einem Saug- oder Staudruck ausgesetzt werden, der die Druchströmung der Reinigungskanäle 21 mit Luft und dadurch den Transport des Bohrschmutzes in den Reinigungskanälen 21 fördern kann.

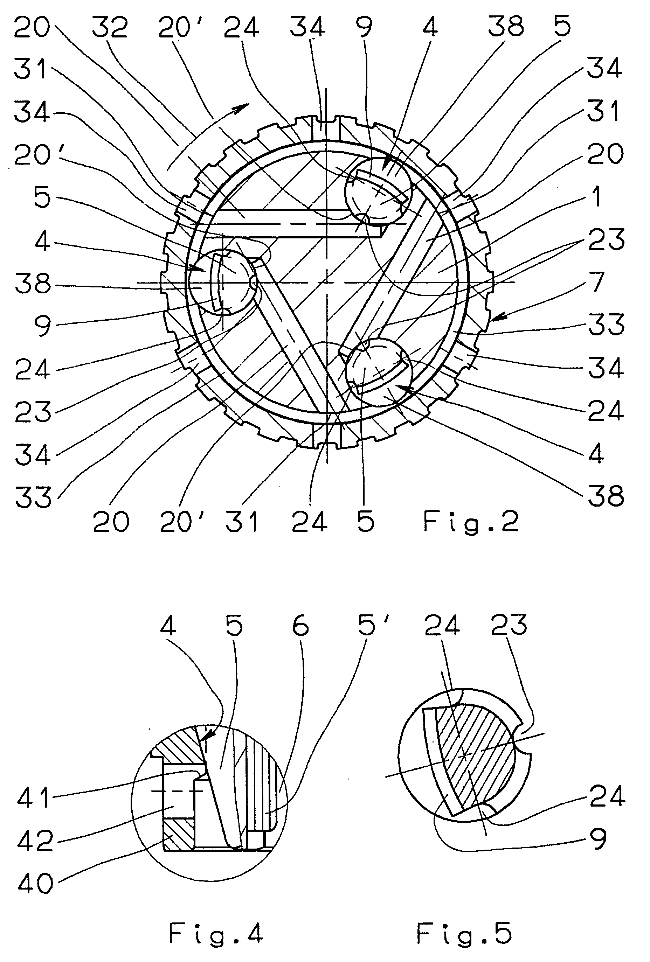

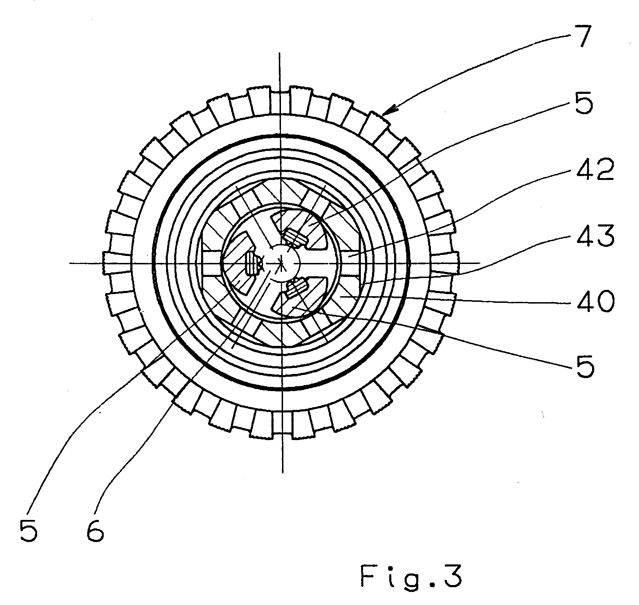

Die Reinigungskanäle 20 können auch, wie im Fall des Bohrfutters nach Fig. 1, im wesentlichen quer zur Futterachse 3, im Ausführungsbeispiel in einer auf der Futterachse 3 senkrecht stehenden Ebene, durch den Futterkörper 1 verlaufen, und zwar in Linien, die in zur Futterachse 3 paralleler Projektion Sekanten des Futterkörperquerschnitts entsprechen, wie dies insbes. aus Fig. 2 ersichtlich ist. Die Reinigungskanäle 20 enden dann an der Umfangsfläche 30 des Futterkörpers 1 offen nach außen. Dabei ist die Anordnung im einzelnen so getroffen, daß die in der Umfangsfläche 30 des Futterkörpers 1 befindlichen Öffnungen 31 der Reinigungkanäle, gesehen in zur Futterachse 3 paralleler Projektion entsprechend Fig. 2, in der durch den Pfeil 32 angedeuteten Drehrichtung des Bohrfutters beim Bohren jeweils hinter der mit dem Reinigungskanal 20 verbundenen Führungsbohrung 7 liegen. Die Achse der Führungsbohrung 4 in der Öffnung 31 an der Umfangsfläche 30 bildet dann mit der dortigen Tangente einen der Drehrichtung des Bohrfutters entgegengesetzt geneigten Winkel, was wiederum dazu geeignet ist, beim Bohren eine Saugwirkung an der Öffnung 31 entstehen zu lassen.

Im übrigen befinden sich die in der Umfangsfläche 30 des Futterkörpers 1 liegenden Öffnungen 31 der Reinigungskanäle 20 axial oberhalb, d. h. auf der vom Aufnahmeraum 6 abgewandten Seite des Stellgewindes 8. Da sie dort durch den Stellring 7 überdeckt sind, sind sie durch einen in Umfangsrichtung zwischen Futterkörper 1 und Stellring 7 verlaufenden Ringkanal 23 verbunden, der durch über den Umfang verteilte Aussparungen 34 im Stellring 7 nach außen geöffnet ist. In den Ausführungsbeispielen ist der Ringkanal 33 durch eine Umfangsnut nur im Futterkörper 1 gebildet, jedoch kann der Ringkanal selbstverständlich durch eine der Umfangsnut im Futterkörper 1 radial gegenüber liegende Umfangsnut auf der Innenseite des Stellrings 7 ergänzt werden, sollte dies hinsichtlich eines größeren lichten Querschnitts für den Ringkanal 33 wünschenswert sein. Auch ist dieser Ringkanal 33 mit den Hohlräumen 38 verbunden, die sich im Bohrfutter an der bohrspindelseitigen Mündung jeder Führungsbohrung 4 zwischen dem Futterkörper 1 und dem Stellring 7 befinden, so daß der Schmutztransport auch aus diesen Hohlräumen 38 durch den Ringkanal 33 in einfacher Weise möglich ist. Dieser Ringkanal 33 kann sogar allein nur der Schmutzableitung aus diesen Hohlräumen 38 dienen, wenn, wie im Ausführungsbeispiel nach Fig. 6, die Reinigungskanäle 21 nur zur bohrspindelseitigen Stirnseite 16 des Futterkörpers 1 geführt sind.

Die Ausführungsformen nach den Fig. 7 bis 9 zeigen Bohrfutter, die zum Anschluß an eine Bohrspindel 1000 bestimmt sind, die einen am Spindelende offenen Luftleitkanal 1002 aufweist, der von der Bohrmaschine 1001, beispielsweise von dessen Kühlgebläse, mit Druck- oder Saugluft gespeist wird. Die von den Führungsbohrungen 4 ausgehenden Reinigungskanäle 200 münden in der Spindelaufnahme 2, in der sie mit dem Luftleitkanal 1002 in Strömungsverbindung stehen, so daß sich der vom Luftleitkanal 1002 in der Spindelaufnahme 2 erzeugte Über- oder Unterdruck durch die Reinigungskanäle 200 in die Führungsbohrungen 4 und weiter in das gesamte Futterinnere ausbreiten kann, was zur verstärkten Luftdurchströmung der Reinigungskanäle 200 und Reinigungsnuten 23 und damit zu einer Verbesserung des Schmutztransports im Futter führen kann.

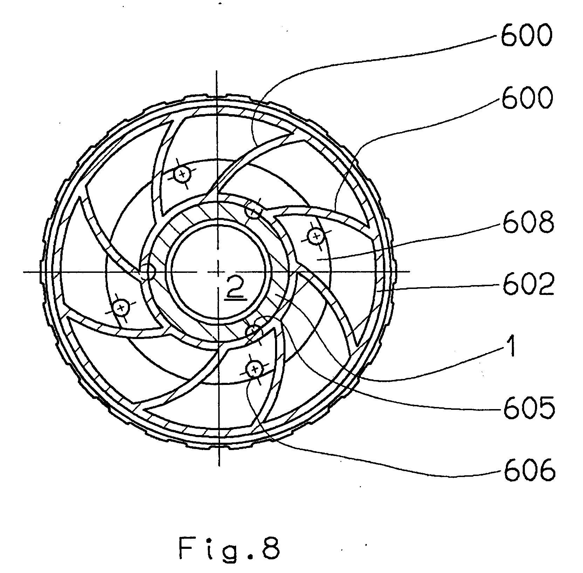

Fehlt ein solcher Luftleitkanal 1002 in der Bohrspindel 1000, bestehen auch andere Möglichkeiten, die Reinigungskanäle einer Saug- oder Druckwirkung auszusetzen, soweit die Reinigungskanäle an der der Bohrmaschine 1001 zugewandten Stirnseite des Bohrfutters enden. Zwei derartige Möglichkeiten sind in den Fig. 7 bis 9 dargestellt. In den Fig. 7 und 8 sind am bohrspindelseitigen Ende des Bohrfutters mit diesem umlaufende Luftleitschaufeln 600 an einem Hals 601 des Futterkörpers 1 angeordnet, die an ihren äußeren Schaufelenden durch einen Schutzring 602 umgeben sind und ein Gebläserad bilde, das bei rotierendem Bohrfutter an den Öffnungen 605, 606 der Reinigungskanäle 604, 607 einen Unterdruck erzeugt. Eine die Öffnungen 605, 606 verbindende Ringnut 608 kann eine gleichmäßige Saugwirkung an allen Öffnungen 605, 606 erzeugen, die jeweils unter sich auf zur Futterachse 3 konzentrischen Kreisen angeordnet sind. In der Fig. 9 ist am bohrspindelseitigen Ende des Bohrfutters ein sich zur Bohrmaschine 1001 hin erweiternder Luftleitteller 610 vorgesehen, der am Boden eine Aussparung 611 aufweist und mit dem Ausparungsrand in die Ringnut 608 greift, so daß sich eine gute Abdichtung zwischen dem Luftleitteller 610 und dem Bohrfutter ergibt und der sich im Luftleitteller 610 einstellende Luftdruck an den Kanalöffnungen 605, 606 wirksam werden kann. Der Luftleitteller 610 wird von der Bohrmaschine 1001 mit Kühlluft angeblasen, die sich im Luftleitteller staut und zu einem Überdruck führt.

Derartige Maßnahmen zur Saug- oder Staudruckerzeugung empfehlen sich vor allem auch an den Öffnungen 17 der Reinigungskanäle 21 bei dem Bohrfutter gemäß Fig. 6, wenn auch dort diese Maßnahmen der besseren Übersicht wegen nicht dargestellt sind.

Um in das Bohrfutter fallenden Bohrschmutz möglichst früh schon beim Eindringen in den Aufnahmeraum 6 abfangen und ableiten zu können, ist in den Ausführungsbeispielen der Futterkörper 1 weiter mit einem bohrwerkzeugseitig vor dem Aufnahmeraum 6 angeordneten Kragen 40 versehen. Der Innendurchmesser 40 dieses Kragens 6 ist etwas größer als der des Aufnahmeraums 6, so daß der Kragen 40 innenseitig mit einer Innenschulter 41 an den Aufnahmeraum 6 anschließt. In der Kragenwand sind nach außen führende Öffnungen 42 vorgesehen, deren Querschnitt mindestens bis zur Innenschulter 41 reicht, in den Ausführungsbeispielen die Innenschulter 41 sogar anschneidet, so daß Bohrschmutz, der innerhalb des Kragens 40 an der Innenschulter 41 aufgehalten wird, wirksam durch die Öffnungen 42 nach außen abgeschleudert wird. Im übrigen kann der Kragen 40 dazu dienen, außenseitig Schlüsselflächen 43, in den Ausführungsbeispielen der Fig. 1 bis 6 nach Art eines Sechskants angeordnet, zu bilden, die das Festziehen des Bohrfutters auf der Bohrspindel erleichtern.

In den Ausführungsbeispielen nach den Fig. 7 bis 9 trägt der Kragen 40 außenseitig eine sich zum Stellring 7 hin erweiternde kegelige Strömungsleithülse 44, die einen mit den Öffnungen 42 in Verbindung stehenden Ringraum 45 bildet, der durch einen Ringspalt 46 zwischen der Strömungsleithülse 44 und dem Stellring 7 nach außen offen ist. In diesem Ringraum 45 entsteht bei der Rotation des Bohrfutters eine nach außen durch den Ringspalt 46 gerichtete Luftströmung, die sehr wirksam Bohrschmutz durch die Kragenöffnungen 42 und den Ringspalt 46 nach außen fördert.

Zusätzliche Reinigungkanäle 26 können im oberen, d. h. der Bohrspindel zugewandten Ende des Aufnahmeraums 6 münden und durch den Futterkörper 1 zu seiner bohrspindelseitigen Stirnfläche 16, wie in Fig. 6, zur Spindelaufnahme 2, wie in den Fig. 7 bis 9, oder zu seiner Umfangsfläche 30, und dort insbes. in den Ringkanal 33 gemäß Fig. 1 verlaufen.

Die in den Führungsbohrungen 4 mündenden, jeweils zweiten Reinigungskanäle 22 liegen axial vor dem Stellgewinde 8, also auf dessen dem Bohrwerkzeug zugewandten Seite. Sie münden zweckmäßig im Bereich der Zahnreihe 9 in jeder Führungsbohrung 4, um in die Führungsbohrung 4 zwischen deren Wandung und der Zahnreihe 9 des Spannbackens 5 eindringenden Schmutz frühzeitig abführen zu können. Soweit dabei im übrigen ein offener Ringraum 35 zwischen dem Stellring 7 und dem Futterkörper 1 auf axial dem Bohrwerkzeug zugewandter Seite des Stellgewindes 8 vorhanden ist, können im Stellring 7 zusätzliche, in diesen Ringraum 35 mündende und nach außen offene Aussparungen 36 vorgesehen sein. Insbes. besteht die in den Fig. 1 und 6 gezeigte Möglichkeit, die Reinigungskanäle 22 und Aussparungen 36 in der Weise miteinander zu kombinieren, daß die Reinigungskanäle 22 zunächst in den offenen Ringraum 35 münden und aus ihnen in den Ringraum 35 gelangender Schmutz durch die Aussparungen 36 abgeführt wird.

Die Fig. 7 und 9 zeigen weiter den Fall, daß die Hohlräume 38 an weitere Reinigungskanäle 604, 607 angeschlossen sind, die an der bohrspindelseitigen Stirnfläche des Bohrfutters in den Öffnungen 605, 606 enden. Dabei verlaufen die Reinigungskanäle 604 im Futterkörper 1 und enden an dessen Stirnfläche 16. Die Reinigungskanäle 607 dagegen durchsetzen unmittelbar axial die Bauteile der Sperreinrichtung 15. Soweit sich diese Bauteile im Betrieb des Bohrfutters gegenseitig um die Futterachse 3 begrenzt verdrehen können, ist dafür Sorge getragen, da die sich entsprechend gegenseitig verdrehenden Abschnitte der Reinigungskanäle 607 miteinander in Störmungsverbindung bleiben.

## Patentansprüche

1. Bohrfutter für ein drehendes oder drehschlagendes Bohrwerkzeug, mit einem koaxial an eine Bohrspindel anschließbaren Futterkörper (1), mit im Futterkörper (1) geneigt zur Futterachse (3) verlaufenden Führungsbohrungen (4) und darin verschiebbar geführten Spannbacken (5), die mit ihrem am Bohrwerkzeug zur Anlage kommenden Backenende in einen im Futterkörper (1) vorgesehenen Aufnahmeraum (6) für das Bohrwerkzeug vorstehen, ferner mit einem mit der Futterachse (3) koaxialen, am Futterkörper (1) gelagerten Stellring (7), der zum Verschieben der Spannbacken (5) in den Führungsbohrungen (4) ein mit der Futterachse koaxiales Stellgewinde (8) aufweist, das an jeder Spannbacke (5) mit einer daran ausgebildeten Zahnreihe (9) im Eingriff steht, und mit im Futterkörper (1) verlaufenden Reinigungskanälen zur Sauberhaltung des Bohrfutters von beim Bohren entstehendem Bohrschmutz, insbesondere zur Abfuhr von in das Bohrfutter gelangendem Bohrschmutz nach außen, dadurch gekennzeichnet, daß die Reinigungskanäle (20, 200, 21, 22) in der Wandung der Führungsbohrungen (4) für die Spannbacken (5) münden.

2. Bohrfutter nach Anspruch 1, dadurch gekennzeichnet, daß die Mündungen (20', 200', 21') der Reinigungskanäle (20, 200, 21) auf der in Bezug auf die Futterachse (3) innenliegenden Wandungsseite der Führungsbohrungen (4) angeordnet sind.

3. Bohrfutter nach Anspruch 2, dadurch gekennzeichnet, daß die Mündungen (20', 200', 21') der Reinigungskanäle (20, 200, 21) der Zahnreihe (9) der Spannbacken (5) in den Führungsbohrungen (4) diametral gegenüber liegen.

4. Bohrfutter nach einem der Ansprüche 1 bis 3, dadurch gekennzeichnet, daß die Mündungen (20', 200', 21') der Reinigungskanäle (20, 200, 21) in Wandungsbereichen der Führungsbohrungen (4) liegen, die sich, gesehen axial vom Aufnahmeraum (6) zur Bohrspindel hin, im oberen Bereich und/oder oberhalb des Stellgewindes (8) befinden.

5. Bohrfutter nach einem der Ansprüche 1 bis 4, dadurch gekennzeichnet, daß die Reinigungskanäle (20, 200, 21) an ihren Mündungen (20', 200', 21') in den Führungsbohrungen (4) mit Reinigungsnuten (23, 24, 25) in Verbindung stehen, die in der Umfangsfläche der Spannbacken (5) und/oder Führungsbohrungen (4) ausgebildet sind.

6. Bohrfutter nach Anspruch 5, dadurch gekennzeichnet, daß die Reinigungsnuten (23, 24) in Längsrichtung der Spannbacken (5) bzw. Führungsbohrungen (4) verlaufen.

7. Bohrfutter nach Anspruch 6, dadurch gekennzeichnet, daß sich eine der längsverlaufenden Reinigungsnuten (23), bezogen auf die Achse der Führungsbohrung (4), auf der der Zahnreihe (9) diametral gegenüber liegenden Seite der Spannbacke (5) bzw. Führungsbohrung (4) befindet.

8. Bohrfutter nach Anspruch 6 oder 7, dadurch gekennzeichnet, daß die Länge der längsverlaufenden Reinigungsnuten (23) an den Spannbacken (5) etwa gleich der Länge des maximalen Verschiebungshubs der Spannbacken (5) in den Führungsbohrungen (4) ist.

9. Bohrfutter nach einem der Ansprüche 6 bis 8, dadurch gekennzeichnet, daß je eine der längsverlaufenden Reinigungsnuten (24) an den Spannbacken (5) auf den in Umfangsrichtung des Stellrings (7) beiden Seiten der Zahnreihe (9) ausgebildet ist, und zwar in etwa gleicher Länge wie die der Zahnreihe (9).

10. Bohrfutter nach einem der Ansprüche 5 bis 9, dadurch gekennzeichnet, daß die Reinigungsnuten (25) quer in Umfangsrichtung der Spannbacken (5) bzw. Führungsbohrungen (4) verlaufen.

11. Bohrfutter nach den Ansprüchen 5 bis 10, dadurch gekennzeichnet, daß bei längs und quer verlaufenden Reinigungsnuten (23, 24, 25) diese miteinander in Verbindung stehen.

12. Bohrfutter nach einem der Ansprüche 1 bis 11, dadurch gekennzeichnet, daß wenigstens einer der Reinigungskanäle (21) im wesentlichen in Richtung der Futterachse (3) durch den Futterkörper (1) verläuft und an der der Bohrspindel zugekehrten Stirnfläche (16) des Futterkörpers (1) nach außen offen endet.

13. Bohrfutter nach Anspruch 12, dadurch gekennzeichnet, daß bei mehreren Reinigungskanälen (21) mit in der Stirnfläche (16) des Futterkörpers (1) liegenden Öffnungen (17) diese auf einem mit der Futterachse (3) konzentrischen Kreis angeordnet sind.

14. Bohrfutter nach Anspruch 12 oder 13, dadurch gekennzeichnet, daß am bohrspindelseitigen Ende des Bohrfutters ein sich zur Bohrmaschine hin erweiternder Luftleitteller (610) vorgesehen ist, der im Boden eine den Durchtritt der Bohrspindel ermöglichende Aussparung (611) aufweist, deren Rand unter Freilassung höchstens eines schmalen Spalts an das Bohrfutter anschließt, und die mit den Öffnungen (17, 605, 606) der Reinigungskanäle (21, 604, 607) an der Stirnseite des Bohrfutters in Strömungsverbindung steht.

15. Bohrfutter nach Anspruch 14, dadurch gekennzeichnet, daß der Luftleitteller am Futterkörper (1) angeschlossen ist.

16. Bohrfutter nach Anspruch 12 oder 13, dadurch gekennzeichnet, daß am bohrspindelseitigen Ende des Bohrfutters mit diesem umlaufende Luftleitschaufeln (600) vorgesehen sind, die nach Art eines Gebläserades angeordnet sind und eine Luftströmung erzeugen, die an der Stirnfläche (16) des Futterkörpers (1) zumindest im Bereich der Öffnungen (17, 605, 606) der Reinigungskanäle (21, 604, 607) einen Unterdruck oder einen Überdruck ergibt.

17. Bohrfutter nach Anspruch 16, dadurch gekennzeichnet, daß die Luftleitschaufeln (600) am Futterkörper (1) sitzen und an den radial äußeren Schaufelenden von einem Schutzring (602) umgeben sind.

18. Bohrfutter nach einem der Ansprüche 1 bis 17, dadurch gekennzeichnet, daß im Fall eines Bohrfutters, das zum Anschluß an eine Bohrspindel bestimmt ist, die einen am Spindelende offenen Luftleitkanal (1002) besitzt, der Futterkörper (1) eine Spindelaufnahme (2) für die Bohrspindel besitzt und wenigstens einer der Reinigungskanäle (200) in der Spindelaufnahme (2) mündet, in der er mit dem Luftleitkanal (1002) in Strömungsverbindung steht.

19. Bohrfutter nach einem der Ansprüche 1 bis 18, dadurch gekennzeichnet, daß wenigstens einer der Reinigungskanäle (20) im wesentlichen quer zur Futterachse (3) durch den Futterkörper (1) längs einer Linie, die in zur Futterachse (3) paralleler Projektion einer Sekante entspricht, verläuft und an der Umfangsfläche (30) des Futterkörpers (1) nach außen offen endet.

20. Bohrfutter nach Anspruch 19, dadurch gekennzeichnet, daß bei mehreren Reinigungskanälen (20) deren in der Umfangsfläche (30) des Futterkörpers (1) befindlichen Öffnungen (31), gesehen in zur Futterachse (3) paralleler Projektion, in der Drehrichtung des Bohrfutters beim Bohren jeweils hinter der mit dem Reinigungskanal (20) verbundenen Führungsbohrung (4) liegen.

21. Bohrfutter nach Anspruch 19 oder 20, dadurch gekennzeichnet, daß die in der Umfangsfläche (30) des Futterkörpers (1) liegenden Öffnungen (31) der Reinigungkanäle (20) sich axial oberhalb, d. h. auf der vom Aufnahmeraum (6) abgewandten Seite des Stellgewindes (8) befinden und, im Fall ihrer Überdeckung durch den Stellring (7), durch einen in Umfangsrichtung verlaufenden Ringkanal (33) verbunden sind, der durch Aussparungen (34) im Stellring (7) nach außen geöffnet ist.

22. Bohrfutter nach Anspruch 21, dadurch gekennzeichnet, daß der Ringkanal (34) durch eine Umfangsnut im Futterkörper (1) und/oder auf der Innenseite des Stellrings (7) gebildet ist.

23. Bohrfutter nach Anspruch 21 oder 22, dadurch gekennzeichnet, daß der Ringkanal (34) mit den Hohlräumen (38) verbunden ist, die sich im Bohrfutter an der bohrspindelseitigen Mündung jeder Führungsbohrung (4) zwischen dem Futterkörper (1) und dem Stellring (7) befinden.

24. Bohrfutter nach einem der Ansprüche 1 bis 23, dadurch gekennzeichnet, daß der Futterkörper (1) einen bohrwerkzeugseitig vor dem Aufnahmeraum (6) angeordneten Kragen (40) aufweist, der im Innendurchmesser etwas großer als der Aufnahmeraum (6) ist und mit einer Innenschulter (41) an den Aufnahmeraum (6) anschließt, und daß in der Kragenwand nach außen führende Öffnungen (42) vorgesehen sind, deren Querschnitt mindestens bis zur Innenschulter (41) reicht.

25. Bohrfutter nach Anspruch 24, dadurch gekennzeichnet, daß der Öffnungsquerschnitt in der Kragenwand die Innenschulter (41) anschneidet.

26. Bohrfutter nach Anspruch 24 oder 25, dadurch gekennzeichnet, daß der Kragen (40) außenseitig eine sich zum Stellring (7) hin erweiternde Strömungsleithülse (44) trägt, die mit dem Kragen (40) und dem Futterkörper (1) einen mit den Öffnungen (42) in Verbindung stehenden Ringraum (45) bildet, der durch einen Ringspalt (46) zwischen den Rändern der Strömungsleithülse (44) und des Stellrings (7) nach außen offen ist.

27. Bohrfutter nach Anspruch 26, dadurch gekennzeichnet, daß im Ringraum (45) mit dem Bohrfutter rotierende Querrippen oder andere Vorsprünge vorgesehen sind, die im Sinne von Gebläseschaufeln arbeiten.

28. Bohrfutter nach einem der Ansprüche 1 bis 27, dadurch gekennzeichnet, daß zusätzliche Reinigungskanäle (26) vorgesehen sind, die im oberen, d. h. der Bohrspindel zugewandten Ende des Aufnahmeraums (6) münden und durch den Futterkörper (1) zu seiner Umfangsfläche (30), zu seiner bohrspindelseitigen Stirnfläche (16) oder zur Spindelaufnahme (2) im Futterkörper (1) verlaufen.

29. Bohrfutter nach einem der Ansprüche 1 bis 28, dadurch gekennzeichnet, daß im Falle eines offenen Ringraumes (35) zwischen dem Stellring (7) und dem Futterkörper (1) auf axial dem Bohrwerkzeug zugewandter Seite des Stellgewindes (8) weitere Aussparungen (36) im Stellring (7) vorgesehen sind, die den Ringraum (35) nach außen öffnen.

30. Bohrfutter nach einem der Ansprüche 1 bis 29, dadurch gekennzeichnet, daß die Hohlräume (38), die sich im Bohrfutter an der bohrspindelseitigen Mündung der Führungsbohrungen (4) zwischen dem Futterkörper (1) und dem Stellring (7) befinden, an weitere Reinigungskanäle (604, 607) angeschlossen sind, die an der bohrspindelseitigen Stirnfläche des Bohrfutters münden.

31. Bohrfutter nach Anspruch 30, dadurch gekennzeichnet, daß die in der Stirnfläche des Bohrfutters liegenden Öffnungen (605, 606) der weiteren Reinigungskanäle (604, 607) auf einem mit der Futterachse (3) konzentrischen Kreis angeordnet sind.

32. Bohrfutter nach Anspruch 30 oder 31, dadurch gekennzeichnet, daß bei einem Bohrfutter mit zwischen dem Stellring (7) und dem Futterkörper (1) angeordneter, ungewünschte Verdrehungen des Stellrings (7) verhindernder Sperreinrichtung (15) wenigstens einer der weiteren Reinigungskanäle (607) die Bauteile der Sperreinrichtung (15) durchsetzt.

## Claims

1. A drilling chuck for a rotary or rotary-hammer drilling tool, comprising a chuck body (1) which can be connected coaxially to a drilling spindle, guide bores (4) which extend in the chuck body (1) inclinedly relative to the chuck axis (3) and clamping jaws (5) which are guided displaceably therein and which with their jaw end that comes to bear against the drilling tool project into a receiving space (6) provided in the chuck body (1) for the drilling tool, further comprising a setting ring (7) which is coaxial with the chuck axis (3) and which is mounted on the chuck body (1) and which for displacement of the clamping jaws (5) in the guide bores (4) has a setting screwthread (8) which is coaxial with the chuck axis and which is in engagement at each clamping jaw (5) with a row of teeth (9) provided thereon, and further comprising cleaning passages which extend in the chuck body (1) for keeping the drilling chuck clean of drilling dirt which is produced in the drilling operation, in particular for carrying away drilling dirt which passes into the drilling chuck to the exterior, characterised in that the cleaning passages (20, 200, 21, 22) open in the wall of the guide bores (4) for the clamping jaws (5).

2. A drilling chuck according to claim 1 characterised in that the mouth openings (20', 200', 21') of the cleaning passages (20, 200, 21) are arranged on the wall side of the guide bores (4), which is inwardly disposed in relation to the chuck axis (3).

3. A drilling chuck according to claim 2 characterised in that the mouth openings (20', 200', 21') of the cleaning passages (20, 200, 21) are disposed in diametrally opposite relationship to the row of teeth (9) of the clamping jaws (5) in the guide bores (4).

4. A drilling chuck according to one of claims 1 to 3 characterised in that the mouth openings (20', 200', 21') of the cleaning passages (20, 200, 21) are disposed in wall regions of the guide bores (4) which, as viewed axially from the receiving space (6) towards the drilling spindle, are disposed in the upper region of and/or above the setting screwthread (8).

5. A drilling chuck according to one of claims 1 to 4 characterised in that the cleaning passages (20, 200, 21) communicate at their mouth openings (20', 200', 21') in the guide bores (4) with cleaning grooves (23, 24, 25) which are provided in the peripheral surface of the clamping jaws (5) and/or guide bores (4).

6. A drilling chuck according to claim 5 characterised in that the cleaning grooves (23, 24) extend in the longitudinal direction of the clamping jaws (5) or the guide bores (4) respectively.

7. A drilling chuck according to claim 6 characterised in that one of the longitudinally extending guide grooves (23), with respect to the axis of the guide bore (4), is disposed on the side of the clamping jaw (5) or guide bore (4) respectively, that is in diametrally opposite relationship to the row of teeth (9).

8. A drilling chuck according to claim 6 or claim 7 characterised in that the length of the longitudinally extending cleaning grooves (23) on the clamping jaws (5) is approximately equal to the length of the maximum displacement stroke movement of the clamping jaws (5) in the guide bores (4).

9. A drilling chuck according to one of claims 6 to 8 characterised in that a respective one of the longitudinally extending guide grooves (24) on the clamping jaws (5) is provided on each of the two sides of the row of teeth (9), in the peripheral direction of the setting ring (7), more specifically being of approximately the same length as that of the row of teeth (9).

10. A drilling chuck according to one of claims 5 to 9 characterised in that the cleaning grooves (25) extend transversely in the peripheral direction of the clamping jaws (5) or the guide bores (4) respectively.

11. A drilling chuck according to claims 5 to 10 characterised in that with longitudinally and transversely extending cleaning grooves (23, 24, 25) they are in communication with each other.

12. A drilling chuck according to one of claims 1 to 11 characterised in that at least one of the cleaning passages (21) extends substantially in the direction of the chuck axis (3) through the chuck body (1) and terminates outwardly open at the end face (16) of the chuck body (1), which is towards the drilling spindle.

13. A drilling chuck according to claim 12 characterised in that with a plurality of cleaning passages (21) having openings (17) in the end face (16) of the chuck body (1) the openings are arranged on a circle which is concentric with the chuck axis (3).

14. A drilling chuck according to claim 12 or claim 13 characterised in that provided at the drilling spindle end of the drilling chuck is an air guide plate (610) which expands towards the drilling machine and which in the bottom has an opening (611) which permits the drilling spindle to pass therethrough and whose edge adjoins the drilling chuck leaving free at most a narrow gap, and which is in flow communication with the openings (17, 605, 606) of the cleaning passages (21, 604, 607) at the end of the drilling chuck.

15. A drilling chuck according to claim 14 characterised in that the air guide plate is connected to the chuck body (1).

16. A drilling chuck according to claim 12 or claim 13 characterised in that provided at the drilling spindle end of the drilling chuck are air guide vanes (600) which rotate with the drilling chuck and which are arranged in the manner of an impeller wheel and produce an air flow which results in a reduced pressure or an increased pressure at the end face (16) of the chuck body (1) at least in the region of the openings (17, 605, 606) of the cleaning passages (21, 604, 607).

17. A drilling chuck according to claim 16 characterised in that the air guide vanes (600) are carried on the chuck body (1) and are surrounded at the radially outer vane ends by a guard ring (602).

18. A drilling chuck according to one of claims 1 to 17 characterised in that in the case of a drilling chuck which is intended for connection to a drilling spindle which has an air guide passage (1002) which is open at the spindle end, the chuck body (1) has a spindle receiving means (2) for the drilling spindle and at least one of the cleaning passages (200) opens in the spindle receiving means (2) in which it is in flow communication with the air guide passage (1002).

19. A drilling chuck according to one of claims 1 to 18 characterised in that at least one of the cleaning passages (20) extends substantially transversely with respect to the chuck axis (3) through the chuck body (1) along a line which corresponds in projection parallel to the chuck axis (3) to a secant and which terminates outwardly open at the peripheral surface (30) of the chuck body (1).

20. A drilling chuck according to claim 19 characterised in that when there are a plurality of cleaning passages (20) their openings (31) in the peripheral surfae (30) of the chuck body (1), as viewed in a projection parallel to the chuck axis (3), are respectively disposed after the guide bore (4) connected to the cleaning passage (20), in the direction of rotation of the drilling chuck in the drilling operation.

21. A drilling chuck according to claim 19 or claim 20 characterised in that the openings (31) of the cleaning passages (20), which are disposed in the peripheral surface (30) of the chuck body (1), are axially above the setting screwthread (8), that is to say on the side thereof remote from the receiving space (6), and, when they are covered by the setting ring (7), they are connected by an annular passage (33) which extends in the peripheral direction and which is opened outwardly through apertures (34) in the setting ring (7).

22. A drilling chuck according to claim 21 characterised in that the annular passage (34) is formed by a peripheral groove in the chuck body (1) and/or on the inside of the setting ring (7).

23. A drilling chuck according to claim 21 or claim 22 characterised in that the annular passage (34) is connected to the spaces (38) which are disposed in the drilling chuck at the drilling spindle-end mouth opening of each guide bore (4) between the chuck body (1) and the setting ring (7).

24. A drilling chuck according to one of claims 1 to 23 characterised in that the chuck body (1) has a collar (40) which is arranged at the drilling tool side in front of the receiving space (6) and which is of somewhat larger inside diameter than the receiving space (6) and which joins the receiving space (6) with an inside shoulder (41), and that provided in the collar wall are outwardly leading openings (42) whose cross-section reaches at least as far as the inside shoulder (41).

25. A drilling chuck according to claim 24 characterised in that the cross-section of the opening in the collar wall extends into the inside shoulder (41).

26. A drilling chuck according to claim 24 or claim 25 characterised in that on the outside the collar (40) carries a flow guide sleeve (44) which expands towards the setting ring (7) and which with the collar (40) and the chuck body (1) forms an annular space (45) which communicates with the openings (42) and which is open outwardly through an annular gap (46) between the edges of the flow guide sleeve (44) and the setting ring (7).

27. A drilling chuck according to claim 26 characterised in that provided in the annular space (45) are transverse ribs or other projections which rotate with the drilling chuck and which operate in the manner of impeller vanes.

28. A drilling chuck according to one of claims 1 to 27 characterised in that there are provided additional cleaning passages (26) which open in the end of the receiving space (6), that is the upper end, that is to say towards the drilling spindle, which cleaning passages extend through the chuck body (1) to its peripheral surface (30), to its end face (16) at the drilling spindle end or to the spindle receiving means (2) in the chuck body (1).

29. A drilling chuck according to one of claims 1 to 28 characterised in that in the case of an open annular space (35) between the setting ring (7) and the chuck body (1) provided on the side of the setting screwthread (8) that is axially towards the drilling tool are further apertures (36) in the setting ring (7) which open the annular space (35) outwardly.

30. A drilling chuck according to one of claims 1 to 29 characterised in that the spaces (38) in the drilling chuck at the drilling spindle-end mouth opening of the guide bores (4) between the chuck body (1) and the setting ring (7) are connected to further cleaning passages (604, 607) which open at the end surface of the drilling chuck, that is towards the drilling spindle.

31. A drilling chuck according to claim 30 characterised in that the openings (605, 606), which are in the end surface of the drilling chuck, of the further cleaning passages (604, 607) are arranged on a circle which is concentric with the chuck axis (3).

32. A drilling chuck according to claim 30 or claim 31 characterised in that in a drilling chuck with a locking arrangement (15) which is disposed between the setting ring (7) and the chuck body (1) for preventing unwanted rotary movements of the setting ring (7) at least one of the further cleaning passages (607) passes through the components of the locking arrangement (15).

## Revendications

1. Mandrin de perçage pour un outil de perçage à rotation ou à rotation-percussion, avec un corps de mandrin (1) qui peut être lié de à une broche de perceuse, coaxialement à celle-ci, avec des trous de guidage (4) inclinés par rapport à l'axe du mandrin (3) et des mors de serrage (5) qui sont guidés coulissants dans lesdits trous et qui, par leur extrémité en contact avec l'outil de perçage, font saillie dans une chambre de réception (6) de l'outil prévue dans le corps de mandrin (1), avec en outre une bague de réglage (7) montée sur le corps de mandrin (1), coaxiale à l'axe du mandrin (3), qui, aux fins de déplacer les mors de serrage (5) dans les trous de guidage (4), présente un filetage de réglage (8) coaxial à l'axe du mandrin (3) qui est en prise avec une rangée de dents (9) aménagées sur chaque mors de serrage (5), et avec des canaux de nettoyage qui s'étendent dans le corps de mandrin (1) aux fins de maintenir le mandrin de perçage libre de poussière de perçage produite lors des opérations de perçage, notamment pour évacuer vers l'extérieur la poussière de perçage qui pénètre dans le mandrin, caractérisé par le fait que les canaux de nettoyage (20, 200, 21, 22) débouche dans la paroi des trous de guidage (4) pour les mors de serrage (5).

2. Mandrin de perçage selon la revendication 1, caractérisé par le fait que les embouchures (20', 200', 21') des canaux de nettoyage (20, 200, 21) sont disposées sur la face intérieure de la paroi des trous de guidage (4), par rapport à l'axe du mandrin (3).

3. Mandrin de perçage selon la revendication 2, caractérisé par le fait que les embouchures (20', 200', 21') des canaux de nettoyage (20, 200, 21), dans les trous de guidage (4), sont diamétralement opposées à la rangée de dents (9) des mors de serrage (5).

4. Mandrin de perçage selon une des revendications 1 à 3, caractérisé par le fait que les embouchures (20', 200', 21') des canaux de nettoyage (20, 200, 21) sont disposées dans des régions de paroi des trous de guidage (4) qui, vu dans la direction axiale, de la chambre de réception (6), vers la broche de perceuse, se trouvent dans la partie supérieure et/ou au-dessus du filetage de réglage (8).

5. Mandrin de perçage selon une des revendications 1 à 4, caractérisé par le fait que les canaux de nettoyage (20, 200, 21) au niveau de leurs embouchures (20', 200', 21'), communiquent avec des rainures de nettoyage (23, 24, 25) qui sont aménagées dans la surface périphérique des mors de serrage (5) et/ou des trous de guidage (4).

6. Mandrin de perçage selon la revendication 5, caractérisé par le fait que les rainures de nettoyage (23, 24) s'étendent dans la direction longitudinale des mors de serrage (5) ou des trous de guidage (4).

7. Mandrin de perçage selon la revendication 6, caractérisé par le fait que, par rapport à l'axe du trou de guidage (4), l'une des rainures de nettoyage (23) longitudinales est située sur le côté du mors de serrage (5) ou du trou de guidage (4) diamétralement opposé à la rangée de dents (9).

8. Mandrin de perçage selon la revendication 6 ou 7, caractérisé par le fait que la longueur des rainures de nettoyage (23) longitudinales (23) dans les mors de serrage (5) est sensiblement égale à la longueur de la course de coulissement maximale des mors de serrage (5) dans les trous de guidage (4).

9. Mandrin de perçage selon une des revendications 6 à 8, caractérisé par le fait qu'une rainure de nettoyage (24) longitudinale est aménagée dans les mors de serrage (5), de chaque côté de la rangée de dents (9), vu dans la direction périphérique de la bague de réglage (7), avec une longueur sensiblement égale à la longueur de la rangée de dents (9).

10. Mandrin de perçage selon une des revendications 5 à 9, caractérisé par le fait que les rainures de nettoyage (25) s'étendent transversalement dans la direction périphérique des mors de serrage (5) ou des trous de guidage (4).

11. Mandrin de perçage selon les revendications 5 à 10, caractérisé par le fait que dans le cas de rainures de nettoyage (23, 24, 25) s'étendant dans les directions longitudinale et transversales, lesdites rainures de nettoyage communiquent les unes avec les autres.

12. Mandrin de perçage selon une des revendications 1 à 11, caractérisé par le fait qu'au moins l'un des canaux de nettoyage (21) s'étend essentiellement dans la direction de l'axe du mandrin (3) à travers le corps de mandrin (1) et est ouvert en direction de l'extérieur au niveau de la face frontale (16) du mandrin de perçage (1) tournée vers la broche de perceuse.

13. Mandrin de perçage selon la revendication 12, caractérisé par le fait que, dans de cas de plusieurs canaux de nettoyage (21) avec des ouvertures (17) situées dans la face frontale (16) du corps de mandrin (1), les ouvertures sont disposées sur un cercle concentrique à l'axe du mandrin (3).

14. Mandrin de perçage selon la revendication 12 ou 13, caractérisé par le fait qu'il est prévu à l'extrémité côté broche de perceuse du mandrin de perçage un plateau de guidage d'air (610) qui présente au niveau de son fond un trou (611) permettant le passage de la broche de perceuse, dont le bord se raccorde au mandrin de perçage en laissant subsister au maximum une fente étroite et qui est en communication d'écoulement avec les ouvertures (17, 605, 606) des canaux de nettoyage (21, 604, 607) dans la face frontale du mandrin de perçage.

15. Mandrin de perçage selon la revendication 14, caractérisé par le fait que le plateau de guidage d'air est relié au corps de mandrin (1).

16. Mandrin de perçage selon la revendication 12 ou 13, caractérisé par le fait qu'il est prévu, à l'extrémité côté broche de perceuse du mandrin de perçage, des ailettes de guidage d'air (600), lesquelles ailettes tournent avec le mandrin, sont disposées à la manière d'une roue de ventilateur et produisent un flux d'air qui entraîne une dépression ou une surpression au niveau de la face frontale (16) du corps de mandrin (1), au moins dans la région des ouvertures (17, 605, 606) des conduits de nettoyage (21, 604, 607).

17. Mandrin de perçage selon la revendication 16, caractérisé par le fait que les ailettes de guidage d'air (600) sont montées sur le corps de mandrin (1) et sont entourées d'une bague de protection (602) à leur extrémité située radialement à l'extérieur.

18. Mandrin de perçage selon une des revendications 1 à 17, caractérisé par le fait que dans le cas d'un mandrin de perçage destiné à être monté sur une broche de perceuse qui comporte un canal d'amenée d'air (1002) à l'extrémité ouverte de la broche, le corps de mandrin (1) est pourvu d'un logement de broche (2) pour la broche de perceuse et qu'au moins un des canaux de nettoyage (200) débouche dans le logement de broche (2) par lequel il est en communication d'écoulement avec le canal d'amenée d'air (1002).

19. Mandrin de perçage selon une des revendications 1 à 18, caractérisé par le fait qu'au moins un des canaux de nettoyage (20) s'étend essentiellement transversalement à l'axe du mandrin (3) suivant une ligne qui en projection parallèle à l'axe du mandrin (3) correspond à une sécante et se termine par une ouverture communiquant avec l'extérieur dans la surface périphérique (30) du corps de mandrin (1).

20. Mandrin de perçage selon la revendication 19, caractérisé par le fait que dans le cas de plusieurs canaux de nettoyage (20), les ouvertures (31) de ceux-ci situées dans la surface périphérique (30) du corps de mandrin, vu en projection parallèle à l'axe du mandrin (3), dans la direction de rotation du mandrin lors du perçage, sont situées chaque fois derrière le trou de guidage (4) communiquant avec le canal de nettoyage (20).

21. Mandrin de perçage selon la revendication 19 ou 20, caractérisé par le fait que les ouvertures (31) des canaux de nettoyage (20) situées dans la surface périphérique (30) du corps de mandrin (1) se trouvent axialement au-dessus du filetage de réglage (8), c'est-à-dire du côté de celui-ci éloigné de la chambre de réception (6), et, lorsqu'elles sont recouvertes par la bague de réglage (7) sont reliées par un canal annulaire (33) s'étendant dans la direction périphérique qui est ouvert sur l'extérieur par l'intermédiaire d'évidements (34) dans la bague de réglage (7).

22. Mandrin de perçage selon la revendication 21, caractérisé par le fait que le canal annulaire (34) est formé d'une rainure continue dans le corps de mandrin (1) et/ou sur la face intérieure de la bague de réglage (7).

23. Mandrin de perçage selon la revendication 21 ou 22, caractérisé par le fait que le canal annulaire (34) communique avec les cavités (38) qui se trouvent dans le mandrin de perçage à l'embouchure côté broche de perceuse de chaque trou de guidage (4), entre le corps de mandrin (1) et la bague de réglage (7).

24. Mandrin de perçage selon une des revendications 1 à 23, caractérisé par le fait que le corps de mandrin (1) comporte un collet (40) qui est disposé côté outil de perçage devant la chambre de réception (6), dont le diamètre est légèrement supérieur à celui de la chambre de réception (6) et qui se raccorde avec un épaulement intérieur (41) à la chambre de réception (6) et par le fait que des ouvertures (42) menant à l'extérieur, dont la section s'étend au moins jusqu'à l'épaulement intérieur (41) sont prévues dans la paroi du collet.

25. Mandrin de perçage selon la revendication 24, caractérisé par le fait que la section des ouvertures dans la paroi du collet interfère avec l'épaulement interne (41).

26. Mandrin de perçage selon la revendication 24 ou 25, caractérisé par le fait que le collet (40) présente côté extérieur une douille de guidage d'écoulement (44) qui s'évase en direction de la bague de réglage (7), forme avec le collet (40) et le corps de mandrin (1) une chambre annulaire (45) qui communique avec les ouvertures (42) et est ouverte vers l'extérieur par un espace annulaire (46) entre les bords de la douille de guidage d'écoulement (44) et de la bague de réglage (7).

27. Mandrin de perçage selon la revendication 26, caractérisé par le fait qu'il est prévu dans la chambre annulaire (45) des nervures ou d'autres éléments saillants qui tournent avec le mandrin de perçage et agissent à la manière d'ailettes de ventilateur.

28. Mandrin de perçage selon une des revendications 1 à 27, caractérisé par le fait qu'il est prévu des canaux de nettoyage (26) supplémentaires qui débouchent dans la région supérieure, c'est-à-dire dans la région tournée vers la broche de perceuse, de la chambre de réception (6) et s'étendent à travers le corps de mandrin (1) en direction de la surface périphérique (30) de celui-ci, en direction de la face frontale (16) de celui-ci ou en direction du logement de broche (2).

29. Mandrin de perçage selon une des revendications 1 à 28, caractérisé par le fait que dans le cas d'une chambre annulaire (35) ouverte entre la bague de réglage (7) et le corps de mandrin (1), des évidements supplémentaires (36) qui ouvrent la chambre annulaire (35) sur l'extérieur sont prévus du côté du filetage de réglage (8) tourné axialement vers l'outil de perçage.

30. Mandrin de perçage selon une des revendications 1 à 29, caractérisé par le fait que les cavités (38) qui s'étendent dans le mandrin de perçage se trouvent à l'embouchure côté broche de perceuse des trous de guidage (4), entre le corps de mandrin (1) et la bague de réglage (7), sont connectées à des canaux de nettoyage (604, 607) supplémentaires qui débouchent dans la face frontale côté broche de perceuse du mandrin de perçage.

31. Mandrin de perçage selon la revendication 30, caractérisé par le fait que les ouvertures (605, 606) des canaux de nettoyage (604, 607) supplémentaires situées dans la face frontale du mandrin de perçage sont disposées sur un cercle concentrique à l'axe du mandrin (3).

32. Mandrin de perçage selon la revendications 30 ou 31, caractérisé par le fait que dans le cas d'un mandrin avec un dispositif de blocage (15) empêchant des rotations intempestives de la bague de réglage (7) disposé entre ladite bague de réglage (7) et le corps de mandrin (1), au moins un des canaux de nettoyage supplémentaires (607) traverse les éléments du dispositif de blocage (15).
